# EUROPEAN PATENT APPLICATION

(11) **EP 1 475 736 A2**
(43) Date of publication of application: **10.11.2004**
(21) Application number: 04252677.2
(22) Date of filing: 07.05.2004
(51) Int. Cl.: G06F 17/60

(54) **Method and system for performance analysis for a function or service provided to or in an organisation**

(30) Priority: 07.05.2003 GB 0310371
(71) Applicant: The Salamander Organisation Ltd., York, YO10 5zf (GB)
(72) Inventor: Smith, Simon Robert, York, YO10 5ZF (GB)
(74) Representative: Wood, Graham

(57) **Abstract**

The invention relates to a method and system for the analysis and development of an organisation and the use of elements and sub-elements identified within the organisation in an efficient manner in order to allow predetermined targets to be accomplished. This is achieved by allowing the performance of any said element and associated sub elements to be analysed effectively with respect to and with reference to an organisation representation in which the elements and sub-elements are located.

## Description

The invention to which this application relates is to a method and system which allows the performance of business elements such as an individual and/or organisation to be determined, monitored and analysed in a manner which is efficient and effective to both the party whose performance is being analysed and also the party who has an interest in the results of the analysis.

At the present time there are a number of methods and systems which allow the performance of a party to be assessed. Said system and methods are frequently used by commercial organisations who may, for example, wish to assess the performance of particular department of the organisation, or increasingly, who may wish to monitor the performance of a third party to whom a contract has been awarded to perform a function or task for the organisation i.e. outsourcing.

Typically the conventional systems and methods allow the user to set targets and/or goals for the party to be monitored. These goals and targets are put in place in an attempt to allow the user to exert some form of control over the party being monitored and/or allow assessment to be made of performance of the party by comparison of the actual results against the targets or goals which have been set.

The international marketplace for performance-related products and services is well established, with mature suppliers offering products in four main categories as follows.

A range of performance management methods and tools (e.g. SAS from SAS Institute, and Essbase from Hyperion) offer technologies that deliver a range of methods for operational performance monitoring and reporting. These products are focused on a particular user community within an organization - senior management- users, who are concerned with establishing and monitoring performance of an organization. Although Essbase enables the definition of process, this is captured solely in terms of activity cost and its implications for business performance.

A range of more general performance reporting and management information tools (e.g. Panorama's pbviews and Cognos' Business Intelligence) offer a wide range of graphical tools for extracting and reporting performance against KPIs. Again, these products serve the requirements of business managers for understanding and analysing business performance.

A further set of tools (e.g. BMC's MAINVIEW) address the requirement to monitor and analyse the performance and utilisation of business infrastructure, especially IT systems. These products serve IT managers and systems administrators.

A fourth set of tools (e.g. Lanner's Witness and Simul8) provide performance prediction capability to support operational planning and scheduling. The users for these tools are typically business analysts and workflow designers.

A problem with the conventional systems and methods is that the performance analysis and the setting of the goals and/or targets tends to be in isolation. By isolation is meant that the targets and goals can often be set in isolation from other factors within the organisation i.e. a best guess, and as a result the subsequent analysis of the performance can be flawed as it is made with regard to targets or goals which may not be correct and/or other organisation features are not taken into account.

Organisations typically can have an organisation system which allows various elements of the organisation to be linked to other elements in a logical and diagrammatic manner thereby allowing the user to use visual representations of the organisation to look at various levels of detail of the organisation and the links between various elements of the same. One such system is provided by the applicant under the Trade Mark "Knowledge Map". The knowledge map basically comprises a series of elements which have been identified as being required within the organisation and for the organisation to function correctly and efficiently. In addition to the elements being identified, the elements are also linked to other elements to provide an indication to the user of the interaction between the elements. In addition to the elements and links, which are typically provided visually on a computer screen, and generated from a database, the visual representations can include links or activators to other systems which may be used and accessed when the particular activator is selected on the screen. This is known to provide an efficient and effective interface for a user to be able to identify and utilise elements required within an organisation.

The aim of the present invention is to provide a system and method whereby the performance of any said element can be analysed effectively with respect to and reference to the organisation representation.

In a first aspect of the invention there is provided a method for the analysis of performance of a party with respect to at least one target or goal with respect to a service performed for an organisation, said method including generating a representation of the organisation including a plurality of elements identified for said organisation, storing details relating to said element in a database memory, generating links between at least some of said elements in the database to identify co-dependencies between the same and wherein said method includes the further steps or any combination of setting a goal or target for performance of said elements, predicting the performance of the element and/or analysis of the actual performance of the element and in performing any of said steps reference is made to at least one of the elements identified in the representation of the organisation.

In one embodiment reference to at least one element includes referring to a number of sub elements of said element. The sub elements are the actions or functions which are identified as being required for the said element to be performed within the organisation.

In one embodiment the sub elements may be weighted by the system with respect to the particular goal or targets being set for the element whose performance is to be monitored. The weighting results in the data for said sub elements being given levels of influence when utilised in the setting of the goals or target, simulation of the performance which is likely to be achieved and/or analysis of the actual performance.

In one embodiment, when performing any of the functions of setting goals or targets, predicting or assessing performance, the system allows, where appropriate an indication of and/or link to another database or service which may be utilised in performing the function.

In a further feature of the invention the system includes a visual indication of the performance of particular elements or sub-elements to indicate problems or performance highlights to the user. For example, for each element and sub element a visual indicator can be provided, the colour of which is controlled with respect to the data held on the same at that instant, and the colour and/or shape and/or a noise associated with the visual representation which is displayed is determined with respect to the status at that instant.

The user of the system is then able to define and monitor performance by defining how the target will be reached via the necessary elements in the organization system and disaggregating these elements until all process and personal responsibilities involved in the required target can be identified.

In one embodiment the use of the organization representation with which the performance management is linked allows the performance management to be inclusive i.e. taking into account other development and transformational initiatives within the organisation.

In a further aspect of the invention there is provided a method for the analysis of performance of an element with respect to at least one target or goal with respect to a service performed for or within an organisation, said method referring to a representation of the organisation including a plurality of elements identified for said organisation, details of the same held in a database memory, and said database including links between at least some of said elements to identify co-dependencies between the same and wherein said method includes the steps of defining the service which is to be provided in terms of the elements of the organisation representation which would be required to perform said service or have an influence of the same and then, with reference to the elements and the service, undertaking any or any combination of setting a goal or target for performance of said element with respect to said service, predicting the performance of the element with respect to said service and/or analysis of the actual performance of the element with respect to said service.

In a further aspect of the invention there is provided a system for the analysis of performance of a party with respect to at least one target or goal with respect to a service performed for an organisation, said system including a representation of the organisation including a plurality of elements identified for said organisation, details of the same held in a database memory, and said database including links between at least some of said elements to identify co-dependencies between the same and wherein said system includes the further functions or any combination of setting a goal or target for performance of said elements, predicting the performance of the element and/or analysis of the actual performance of the element and in performing any of said functions reference is made to at least one of the elements identified in the representation of the organisation.

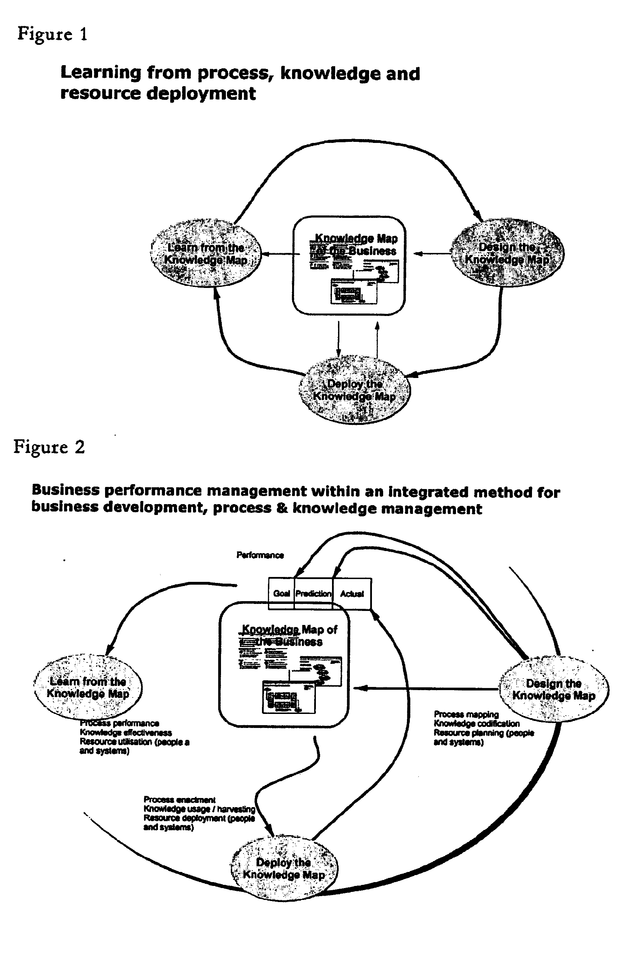

Specific embodiments of the invention are now described with reference to the accompanying diagrams wherein
Figure 1 illustrates in schematic manner the link between the performance analysis and organisation representation in accordance with the invention; and
Figure 2 illustrates the relations hip between the performance analysis and organisation representation in one embodiment.

The present invention relates to a method and system for developing service performance management in the form of a visual, browsable manner by integrating the performance analysis with an organisation representation 2 including predictive and operational data. The aim is to address problems in the various conventional, and disparate approaches being taken to organisational definition, performance definition, performance prediction and operational monitoring and analysis.

By integrating these features the resulting business benefits will allow a greater efficiency and relevance of performance targets and a tighter, closer connection between targets set for performance measures and what actually happens in practice through integration with operational systems. The ability to test and refine a performance regime in a company against best predictions as well as against achieved operational results is also possible.

In any organisation, the management of the same means in practice, the management of a small number of key elements. These key elements can broadly be described and identified as the "vision & strategy" that define the raison d'être of the organization, the " values & culture" that guide its performance, the core "capabilities, processes & activities" that define how the organisation will operate, the "organizational structure" that is used to allocate responsibility for action; the "systems and technology" that enable the capabilities, processes and activities to be carried out and the "knowledge and understanding" that is generated by and utilised by the organisation as it operates.

In general, organisations try to plan, monitor and manage how all of these come together to perform useful work by setting performance measures expressed as targets, goals or key indicators 4, hereinafter referred to as targets and goals. These are used as the primary means of determining behaviour for an identified service. For example, for the service of dealing with an application for a particular membership, the target and goal can be

### "respond to every customer application within three weeks"

### "improve revenue by 10% in the next two months"

However conventionally these targets and goals are not related to the key elements of the organization and rather are done in isolation. As a result the performance of the organisation is likely to be at best sub-optimal, and at worst dysfunctional.

In accordance with the invention, the key elements and sub elements thereto are taken into account as required for each service. This is done by fframing the performance measurement for the service in terms of the connection of key elements in the representation 2 for the organisation to the targets or goals that are to be set, for example in the attempt to manage the provision of the service by a party such as a third party or a department within the organisation. Having taken this step, the development of organisational mapping occurs which addresses the requirements for the provision of the service and provides an approach to managing performance that is connected into how the rest of the organisation sees itself, how it defines itself, operates and tries to improve. Thus the performance can in accordance with this invention be set in that the goals and targets 4 can be set, simulated in that the performance of the service can be predicted 6 and assessed in that the actual provision of the service can be assessed and compared 8 with the predicted performance.

The steps of the process and method are firstly, to utilise the same map of key elements that are used for the organizational representation and particularly those elements which relate to the deployment of services (e.g. operational support and communication) as the basis for performance definition, monitoring and assessment.

With these elements and links identified, the performance prediction functionality is integrated into the design phase for performance measurement, such that the user receives an integrated picture of desired performance of the identified service, the predicted performance, i.e with reference to the elements identified and existing historical data in the reference database, what the method and system predict should be achievable in the performance of the identified service, and actual performance which is measured once the service is being provided and the data for the service provision is available.

The effect of this system and method is the strengthening of the connection between the design of processes and the monitoring of their effectiveness, leading to an increase in organizational learning and the improvement of future service provision.

Representations of organisations such as a Knowledge Map 2, allow the key elements shared across the organization to be identified and provide operational support for the execution of detailed processes. This approach enables organisations to gain from the synergy of making inter-connections between the key elements, with the resulting alignment allowing transformation and managed change. The representation creates a single database repository 2 within which the key elements can be defined and interconnected, with the results published on an intranet within the organisation.

An organisation involved in performance measurement, according to this new standard, will work around a learning cycle of design/optimization 10, deployment 12 and learning 14 which can be utilized as forming the basis for business performance measurement.

In the setting and analysis of performance of a service in accordance with the invention, the first phase of activity - designing and optimising the representation 10 - comprises design work relating to the organization process, knowledge and resources, in terms of people and systems within the organisation.

With regard to measures, this phase generates target and goal values 4 for measures in terms of the element or service performance level that is desired, as well as predicted values 6 i.e. the performance that a predictive or simulation tool suggests that we might see. Predicted values will be derived from a processing tool that has taken as its input, the process and data from the organization representation database 2.

The second phase of activity is deploying the organizational representation 12 by making the same accessible throughout the organisation, typically via an organisation intranet, complete with knowledge and system resources. With regard to the targets and goals these resources generate the actual values of the service provision and generate data representing the same, said data fed back into the organizational representation for analysis of actual service performance 8 as required.

The third phase of activity is a learning stage 14 which involves the comparison and analysis of the measures from the previous two phases, and the setting of the agenda for the next round of development and optimization in terms of performance and provision of the element or service.

Each phase in this cycle has technical challenge and innovation. In the design step 10, targets and goals have to be defined in the organizational representation and the data sources which are required to be referred to for the predicted values and retrieval of the same have to be made in the appropriate process context.

In the deployment step 12 the source of the actual values, and retrieval of these in the appropriate process context needs to be made correctly and in the learning phase 14 the challenge is to present the targets and goals and the predicted and actual values in such a way that analysis of these is possible.

The system and method also allows the user the user to define via the intranet or other electronic provision of the representation, the measurement framework using a combination of targets and process measures.

The present invention therefore provides an effective and improved way of allowing the performance and provision of a service to or within an organization to be predicted and assessed, with reference to the elements of the organization itself. It is envisaged that the system and method can be used by the organization to whom the service is to be provided and or the party providing the service to the organization.

## Claims

1. A method for the analysis of performance of a party with respect to at least one target or goal with respect to a service performed for an organisation, said method including generating a representation of the organisation including a plurality of elements identified for said organisation, storing details relating to said element in a database memory, generating links between at least some of said elements in the database to identify co-dependencies between the same and wherein said method includes the further steps or any combination of setting a goal or target for performance of said elements, predicting the performance of the element and/or analysis of the actual performance of the element and in performing any of said steps reference is made to at least one of the elements identified in the representation of the organisation.

2. A method according to claim 1 wherein the reference to an element includes the steps of referring to a number of sub elements of said element.

3. A method according to claim 2 wherein the sub elements are the actions or functions which are identified as being required for the said element to be performed within the organisation.

4. A method according to claim 3 wherein the sub elements are weighted with respect to the particular goal or targets being set for the element whose performance is to be monitored.

5. A method according to claim 4 wherein the weighting results in the data for said sub elements being given levels of influence when utilised in the setting of the goals or target, simulation of the performance which is likely to be achieved and/or analysis of the actual performance.

6. A method according to claim 1 wherein when performing any of the functions of setting goals or targets or predicting or assessing performance, an indication of a link and/or a link, is generated to another database to be utilised in performing the function.

7. A method according to claim 1 wherein a visual indication of the performance of particular elements or sub-elements is generated.

8. A method according to claim 7 wherein a visual indication is generated for each element and sub element, the condition of said visual indication altering in response to the data held on the element or sub element at that instant.

9. A method according to claim 1 wherein the user of the method defines how the target will be reached via the necessary elements in the organization system and disaggregating these elements until all process and personal responsibilities involved in achieving the required target are identified.

10. A method for the analysis of performance of an element with respect to at least one target or goal with respect to a service performed for or within an organisation, said method referring to a representation of the organisation including a plurality of elements identified for said organisation, details of the same held in a database memory, and said database including links between at least some of said elements to identify co-dependencies between the same and wherein said method includes the steps of defining the service which is to be provided in terms of the elements of the organisation representation which would be required to perform said service or have an influence of the same and then, with reference to the elements and the service, undertaking any or any combination of setting a goal or target for performance of said element with respect to said service, predicting the performance of the element with respect to said service and/or analysis of the actual performance of the element with respect to said service.

11. A method according to claim 10 wherein the elements are first arranged and linked to allow deployment of the elements within the organisation and the analysis of said elements and sub elements is performed with reference to the same arrangement.

12. A system for the analysis of performance of a party with respect to at least one target or goal with respect to a service performed for an organisation, said system including a representation of the organisation including a plurality of elements identified for said organisation, details of the same held in a database memory, and said database including links between at least some of said elements to identify co-dependencies between the same and wherein said system includes the further functions or any combination of setting a goal or target for performance of said elements, predicting the performance of the element and/or analysis of the actual performance of the element and in performing any of said functions reference is made to at least one of the elements identified in the representation of the organisation.
